# EUROPÄISCHE PATENTSCHRIFT

(11) **EP 3 164 619 B1**
(45) Veröffentlichungstag und Bekanntmachung des Hinweises auf die Patenterteilung: **11.10.2017**
(21) Anmeldenummer: 15730465.0
(22) Anmeldetag: 16.06.2015
(51) Int. Cl.: F16D 66/02

(54) **BREMSSYSTEM**
BRAKING SYSTEM
SYSTÈME DE FREIN

(30) Priorität: 01.07.2014 DE 102014212673
(43) Veröffentlichungstag der Anmeldung: 10.05.2017
(73) Patentinhaber: SAF-HOLLAND GmbH, 63856 Bessenbach (DE)
(72) Erfinder: DREWES, Olaf, 63743 Aschaffenburg (DE); MARSCHNER, Oliver, 63808 Haibach (DE)
(74) Vertreter: Müller Schupfner & Partner Patent- und Rechtsanwaltspartnerschaft mbB
(86) Internationale Anmeldenummer: PCT/EP2015/063410
(87) Internationale Veröffentlichungsnummer: WO 2016/000946

(56) Entgegenhaltungen:
- DE-A1- 10 132 968
- JP-U- H0 532 843
- JP-U- S5 226 088
- JP-U- S5 988 538
- JP-U- S53 106 578
- JP-U- S57 190 936
- US-A1- 2006 076 195

## Beschreibung

Die vorliegende Erfindung betrifft ein Bremssystem, insbesondere eine SpreizkeilTrommelbremse zum Einsatz in Nutzfahrzeugen.

Die aus dem Stand der Technik bekannten Bremssysteme unterliegen in der Regel einem gebrauchsabhängigen Verschleiß, wobei bei Erreichen der Verschleißgrenze die Bremswirkung der Bremse geringer wird und nicht mehr gewährleistet ist und somit die Sicherheit der Fahrt des Nutzfahrzeuges nicht mehr gewährleisten werden kann. Um die notwendige Sicherheit gewährleisten zu können, hat es sich dabei bewährt, Verschleißindikatoren oder Verschleißanzeigen an einem Bremssystem vorzusehen, mittels welcher der Verschleißzustand der Bremse feststellbar ist. Insbesondere bei Trommelbremsen, bei welchen die verschleißenden Teile innerhalb der Bremstrommel und somit für einen Anwender von außen nicht sichtbar angeordnet sind, musste dabei bisher auf elektrische Verschleißindikatoren, welche beispielsweise in den Reibbelag der Bremsbacke integriert sind und über ein Leitungssystem bis hin zum Arbeitsplatz des Anwenders oder des Fahrers des Nutzfahrzeuges über elektrische Signale den Verschleißzustand der Bremse übermitteln, zurückgegriffen werden. Diese elektrischen Verschleißindikatoren sind zum einen sehr aufwändig in ihrer Fertigung und zum anderen fehleranfällig und immer davon abhängig, dass das elektrische System des Nutzfahrzeuges fehlerfrei funktioniert. Es besteht daher ein Verbesserungsbedarf am Bremssystem hinsichtlich der Vereinfachung der Verschleißanzeige und der Erhöhung der Verlässlichkeit des Anzeigesystems.

Die JP S52 26088 U betrifft eine Bremsanordnung, bei welcher ein durch das Gehäuse der Bremsanordnung nach außen ragendes Anzeigeelement mit einer der beweglichen Komponenten der Bremseinrichtung verbunden ist und somit einem Anwender den Bewegungszustand der Zuspanneinrichtung der Bremse anzeigt.

Die US 2006/076195 A1 zeigt eine Anzeigevorrichtung zur Anzeige des Verschleißes an einer S-Nockenbremse, wobei verschiedene Blechabschnitte des Verschleißanzeigers zueinander verdreht und rotiert werden, um einen bestimmten Verschleißzustand anzeigen zu können.

Die JP H05 32843 U zeigt eine Spreizeinheit für eine Trommelbremse, bei welcher über ein Mitnehmerelement ein Anzeigeelement relativ zum Gehäuse der Spreizeinheit verschoben wird und somit einen Bewegungszustand der im Gehäuse der Spreizeinheit verschiebbar gelagerten Kolben anzeigt.

Die JP S59 88538 U offenbart ein an einer Bremsbacke einer Trommelbremse festgelegtes Anzeigeelement, welches durch eine Aussparung im Bremsträger hindurch sichtbar ist, wodurch ein bestimmter Bewegungszustand der Bremsbacke relativ zur Aussparung angezeigt ist.

Die JP S53 106578 U offenbart ein Anzeigeelement, welches über eine Welle mit der Bremsbacke einer Trommelbremse verbunden ist und durch ein Abdeckblech der Trommelbremse hindurchragt, wobei das Anzeigeelement den Schwenkzustand der Bremsbacke der Trommelbremse anzeigt.

Die JP S 57 190936 U zeigt eine Trommelbremse mit einer außen liegenden Anzeigeeinheit zur Anzeige des Nachstellzustands der Nachstellvorrichtung der Trommelbremse.

Die DE 101 32 968 A1 zeigt eine Vorrichtung zur Verschleißüberwachung bei einer Gleitsattel-Scheibenbremse, wobei über ein Wegsensorpotentiometer die Dicke der Bremsbeläge überwacht werden kann und über ein elektrisches Signal ausgegeben werden kann.

Aufgabe der vorliegenden Erfindung ist entsprechend die Bereitstellung eines Bremssystems, welches einfach herzustellen ist und eine verlässliche Anzeige bzw. Indikation des Verschleißes des Bremssystems durch einen Anwender ermöglicht.

Diese Aufgabe wird gelöst mit einem Bremssystem gemäß Anspruch 1. Weitere Vorteile und Merkmale der Erfindung ergeben sich aus den abhängigen Ansprüchen.

Erfindungsgemäß umfasst das Bremssystem eine Trägereinheit, eine Betätigungseinheit, eine Referenzeinheit und eine Anzeigeeinheit, wobei die Referenzeinheit die Trägereinheit und die Betätigungseinheit zumindest bereichsweise abschirmt, wobei die Betätigungseinheit an der Trägereinheit angreift und die Trägereinheit in eine bestimmte Position relativ zur Referenzeinheit verlagert oder in einer Position relativ zur Referenzeinheit sichert, wobei die Trägereinheit an der Anzeigeeinheit angreift, um die Anzeigeeinheit in eine bestimmte Position relativ zur Referenzeinheit zu verlagern, wobei ein Verschleißzustand des Bremssystems über die Position der Anzeigeeinheit relativ zu einer an der Referenzeinheit vorgesehenen Referenzgeometrie von außerhalb des Bremssystems bestimmbar ist. Besonders bevorzugt ist das Bremssystem eine Trommelbremse insbesondere zum Einsatz in einem Nutzfahrzeug. Insbesondere bevorzugt ist die Trommelbremse als Spreizkeiltrommelbremse ausgeführt, da für derartige Spreizkeiltrommelbremsen derzeit noch kein einfaches Anzeigesystem für die Verschleißanzeige aus dem Stand der Technik bekannt ist. Das erfindungsgemäße System zur Anzeige des Verschleißes erlaubt es auch bei Spreizkeiltrommelbremsen, ohne den Einsatz komplizierter und fehleranfälliger elektrischer Anzeigesysteme, den Verschleißzustand der Bremse zu bestimmen. Die Referenzeinheit ist vorzugsweise ein Abdeckblech der Trommelbremse und schirmt insbesondere bevorzugt das Innere der Bremstrommel gegen Umwelteinflüsse ab. Im Inneren des Bremssystems befinden sich vorzugsweise die Trägereinheit, ein Abschnitt der Betätigungseinheit und eine Anzeigeeinheit. Die Betätigungseinheit ist dabei vorzugsweise das Betätigungssystem einer Trommelbremse, welches die Bremsbacken der Trommelbremse mit einer Kraft beaufschlagt, so dass diese sich zumindest an einer ihrer beiden Seiten voneinander beabstanden, um von innen gegen die Bremstrommel gepresst zu werden. Die Betätigungseinheit ist in diesem Zusammenhang vorzugsweise als Spreizkeileinheit ausgebildet. Weiterhin bevorzugt umfasst die Betätigungseinheit eine Nachstellvorrichtung, welche bei zunehmend Verschleiß der Bremsbeläge die Nulllage bzw. die Ruhelage der Betätigungseinheit sowie der Bremsbacken dem Verschleiß entsprechend nach außen verschiebt, so dass zumindest im Rahmen der vorgesehenen Lebensdauer der Bremsbeläge stets die gleiche Bremswirkung durch das Bremssystem erzielt werden kann. In diesem Zusammenhang gleicht die Nachstellvorrichtung vorzugsweise den verschleißbedingten Dickenverlust der Bremsbeläge und der Bremstrommel aus und sorgt dafür, dass auch bei zunehmenden Verschleiß der Bremsbeläge bzw. Bremstrommel nur jeweils ungefähr der gleiche Betätigungsweg durch die Betätigungseinheit zurückgelegt werden muss, bis es zu einem Anliegen der Bremsbacken an der Bremstrommel und somit zu einer Bremswirkung kommt. Die Trägereinheit ist vorzugsweise ein Abschnitt auf einem der bewegten Teile des Bremssystems, vorzugsweise auf der Bremsbacke oder des an der Bremsbacke angreifenden Kraftübertragungselements der Betätigungseinheit oder des bewegten Teils der Nachstellvorrichtung. Die Trägereinheit ist dabei insbesondere bevorzugt dafür ausgelegt, an der Anzeigeeinheit derart anzugreifen, dass die Anzeigeeinheit relativ zur Referenzeinheit entsprechend der Bewegung der Trägereinheit relativ zur Referenzeinheit verlagert wird. Die Anzeigeeinheit ist dabei vorzugsweise ein- oder mehrteilig ausgebildet, wobei die Position eines Elements der Anzeigeeinheit relativ zur Referenzeinheit im Zusammenhang mit der Bewegung der Trägereinheit einstellbar ist. An der Referenzeinheit ist eine Referenzgeometrie vorgesehen, welche es für einen Anwender des Bremssystems auf besonders einfache Weise möglich macht, die Position der Anzeigeeinheit relativ zur Referenzeinheit zu bestimmen und von dieser Position auf einen bestimmten Verschleißzustand des Bremssystems zu schließen. Als besonderer Vorteil der vorliegenden Erfindung hat es sich dabei gezeigt, dass die Position der Anzeigeeinheit relativ zur Referenzgeometrie der Referenzeinheit auch im zusammengebauten Zustand des Bremssystems durch einen Anwender entweder visuell oder haptisch, das heißt durch Berühren oder durch Tasten, bestimmbar ist. Das Bremssystem gemäß der vorliegenden Erfindung ist dabei insbesondere dadurch gekennzeichnet, dass ohne weitere elektrische Anzeige oder Überprüfungssysteme der Verschleißzustand der Bremsbeläge des Bremssystems allein durch Feststellen der Position der Anzeigeeinheit relativ zur Referenzgeometrie bestimmbar ist.

In einer bevorzugten Ausführungsform ist die Anzeigeeinheit zumindest abschnittsweise an der Trägereinheit festlegbar. Besonders bevorzugt ist die Anzeigeeinheit dabei ein Element wie beispielsweise ein Bolzen, welches über eine entsprechende Eingriffsgeometrie an der Trägereinheit form- und/oder kraftschlüssig festlegbar ist. Besonders bevorzugt ist die Anzeigeeinheit dabei an der Trägereinheit festgelegt. Weiterhin bevorzugt kann es sein, dass die Anzeigeeinheit stoffschlüssig an der Trägereinheit festgelegt ist, beispielsweise mittels eines Schweißverfahrens. Durch die Festlegung der Anzeigeeinheit an der Trägereinheit ist zu jeder Zeit die genaue Position der Trägereinheit relativ zur Referenzgeometrie über die an der Trägereinheit festgelegte Anzeigeeinheit feststellbar. Mit anderen Worten verlagert sich die Anzeigeeinheit gegenüber der Trägereinheit nicht.

Erfindungsgemäß ist die Anzeigeeinheit zumindest abschnittsweise an der Referenzeinheit geführt und gegen Verlagerung quer zu einer Anzeigebahn gesichert. Zusätzlich oder alternativ zur Festlegung der Anzeigeeinheit an der Trägereinheit kann die Anzeigeeinheit auch an der Referenzeinheit geführt sein. Dabei ist es lediglich erforderlich, dass die Anzeigeeinheit entlang einer Anzeigebahn relativ zur Referenzeinheit verlagerbar bleibt, da die Position der Anzeigeeinheit auf der Anzeigebahn relativ zur Referenzeinheit veränderbar sein muss, um einen bestimmten Verschleißzustand des Bremssystems anzeigen zu können. Die Anzeigebahn kann dabei vorzugsweise gerade oder auch leicht gekrümmt ausgebildet sein. Eine gerade Ausbildung der Anzeigebahn hat den Vorteil, dass sie leicht herzustellen ist. Eine gekrümmte Anzeigebahnfolgt mit Vorteil der Verlagerungsbewegung der Trägereinheit, welche vorzugsweise an der Bremsbacke vorgesehen ist, und ermöglicht somit unter Vermeidung von Gleitreibung eine genaue Bestimmung der Position der Trägereinheit und somit eine genaue Anzeige des Verschleißzustandes. Bevorzugt ist die Anzeigeeinheit in einer länglich ausgebildeten Aussparung der Referenzeinheit, welche sich im Wesentlichen entlang der Anzeigebahn erstreckt, geführt. In einer besonders bevorzugten Ausführungsform ist die Anzeigeeinheit an der Referenzeinheit geführt und dabei nicht an der Trägereinheit festgelegt. Bei dieser Ausführungsform stößt die Trägereinheit bei Betätigung des Bremssystems lediglich an der Anzeigeeinheit an, um diese entlang der Anzeigebahn zu verlagern und in einer Position relativ zur Referenzeinheit zu bringen, welche einen bestimmten Verschleißzustand des Bremssystems kennzeichnet. Die Anzeigeeinheit behält mit Vorteil die maximal ausgelenkte Position an der Referenzgeometrie auch wenn die Trägereinheit bereits nach Beendigung des Betätigungsvorganges des Bremssystems wieder um einen Betätigungsweg zurück verlagert wurde. Es kann vorteilhafterweise auch bei nichtbetätigter Bremse, der Zustand der maximalen Auslenkung als Indikator für den Verschleißzustand des Bremssystems abgelesen werden.

Ferner bevorzugt ist die Anzeigeeinheit entlang der Anzeigebahn im Wesentlichen translatorisch verlagerbar, Im Wesentlichen translatorisch bedeutet dabei, dass kleinere Abweichung von der reinen Bahnbewegung ohne rotatorische Anteile, die 10 Prozent der Hauptbahnbewegung nicht überschreiten im Rahmen der Erfindung möglich sind. Die Anzeigebahn verläuft dabei in der Richtung, in welcher sich die Trägereinheit relativ zur Referenzeinheit bewegt. Auf diese Weise können aufwendige Konstruktionen mit Drehachsen und Hebelelementen vermieden werden, um nicht nur Gewicht einzusparen, sondern auch die Konstruktion möglichst einfach zu halten. Mit Vorteil können hierbei Transformationen von Bewegungsrichtungen vermieden werden, welche eine erhöhte Fehleranfälligkeit verursachen und einem größeren Verschleiß der zueinander bewegten Bauteile unterliegen.

In einer weiteren bevorzugten Ausführungsform weist die Anzeigeeinheit ein Anzeigeelement auf, dessen Position relativ zur Referenzgeometrie durch einen Anwender haptisch und/oder visuell feststellbar ist. Das Anzeigeelement ist dabei vorzugsweise ein Abschnitt der Anzeigeeinheit oder eines von mehreren Elementen der Anzeigeeinheit, welches insbesondere dafür ausgelegt ist, eine bestimmte Position relativ zur Referenzgeometrie einzunehmen und es dabei einem Anwender auf einfache Weise zu erlauben, diese Position zu bestimmen. Insbesondere bevorzugt ist dabei das Anzeigeelement bolzenförmig ausgebildet und ragt durch die Referenzgeometrie hindurch, wobei auf diese Weise die Position des Anzeigeelements durch einen Anwender einfach durch Ertasten des Anzeigeelements bestimmbar ist. Insbesondere bevorzugt ist die Anzeigeeinheit dabei zweiteilig ausgeführt, wobei ein erstes Element der Anzeigeeinheit dafür vorgesehen ist, an der Trägereinheit festgelegt zu sein, und eine Bewegung bzw. Verlagerung der Trägereinheit auf das Anzeigeelement der Trägereinheit zu übertragen, wobei das Anzeigeelement der Trägereinheit vorzugsweise an der Referenzeinheit gesichert bzw. geführt ist, wobei die Position des Anzeigeelements durch einen Anwender von außerhalb des Bremssystems auf einfache Weise beispielsweise durch Tasten bestimmbar ist.

In einer besonders bevorzugten Ausführungsform weist das Anzeigeelement eine Feststellfunktion auf, welche das Anzeigeelement in seiner maximal ausgelenkten Position relativ zur Referenzeinheit sichert. Es versteht sich, dass im Betrieb des Bremssystems die Trägereinheit gemeinsam mit den Bremsbacken und den beweglichen Abschnitten der Betätigungseinheit einen Betriebsweg, das heißt die Wegstrecke, um welche die Bremsbacken relativ zur Bremstrommel verlagert werden, bis es zu einer Bremsung kommt, zurücklegt. Bei Beendigung des Bremsvorgangs wird dieser Betriebsweg durch die Trägereinheit bzw. die entsprechenden Elemente des Bremssystems wieder in entgegengesetzte Richtung zurückgelegt. Es kann aber bevorzugt sein, dass das Anzeigeelement ausgelegt ist, die Relativposition der Trägereinheit relativ zur Referenzgeometrie in dem Zustand anzuzeigen, in dem das Bremssystem die volle Bremswirkung entfaltet, die Bremsbacken also maximal an die Trommelbremse angepresst sind. Bevorzugt weist das Anzeigeelement hierfür eine Eingriffsgeometrie für ein Stellelement der Anzeigeeinheit auf, welches an der Trägereinheit festgelegt ist, wobei das Stellelement das Anzeigeelement zunächst in eine maximal ausgelenkte Position verlagert und bei Entspannung der Bremse den entsprechenden Betriebsweg in entgegengesetzter Richtung zurücklegt, ohne das Anzeigeelement gleichzeitig relativ zur Referenzeinheit zu verlagern. Es ist mit Vorteil ein Verharren des Anzeigeelements in seiner maximal ausgelenkten Position möglich. Besonders bevorzugt weist das Anzeigeelement eine Feststellfunktion auf, welche das Anzeigeelement dagegen sichert, bei Lösen der Bremse relativ zur Referenzeinheit zurückverlagert zu werden. Die Feststellfunktion kann dabei insbesondere bevorzugt durch einen plastisch verformbaren Abschnitt der Anzeigeeinheit gewährleisten werden. Alternativ oder zusätzlich kann das Anzeigeelement auch über eine, beispielsweise als Verzahnung ausgebildete Eingriffsgeometrie an einer entsprechenden Geometrie der Referenzeinheit oder der Referenzgeometrie eingreifen. Mit Vorteil ist durch eine gewisse Mindestkraft die Anzeigeeinheit unter Überwindung der formschlüssigen und/oder kraftschlüssigen Kräfte zwischen Eingriffsgeometrie und Referenzeinheit, das Anzeigeelement relativ zur Referenzeinheit verlagerbar. Mit anderen Worten erlaubt es die Feststellfunktion im periodischen Betrieb des Bremssystems, jeweils den maximalen Weg bzw. die maximal ausgelenkte Position der Bremsbacken relativ zur Referenzgeometrie bestimmen zu können. Je weiter ausgelenkt diese Position der Bremsbacken dabei ist, desto höher ist üblicherweise der am Bremssystem bereits aufgetretene Verschleiß.

Insbesondere bevorzugt ist die Feststellfunktion durch ein Eingriffselement des Anzeigeelements hergestellt, welches formschlüssig und/oder kraftschlüssig in eine Rastgeometrie der Referenzeinheit eingreift. Besonders bevorzugt ist an der Referenzeinheit eine Rastgeometrie vorgesehen, welche beispielsweise als Verzahnung ausgebildet ist. Das Anzeigeelement weist dabei vorzugsweise ein Eingriffselement auf, welches in die Rastgeometrie der Referenzeinheit formschlüssig und/oder kraftschlüssig eingreift.

In einer bevorzugten Ausführungsform steht das Anzeigeelement bereichsweise von der Trägereinheit ab, wobei die Referenzgeometrie als Aussparung ausgebildet ist, durch welche das Anzeigeelement sichtbar und/oder ertastbar ist und/oder durch welche das Anzeigeelement hindurchragt. Insbesondere bevorzugt in dem Fall, in dem das Anzeigeelement form- und/oder stoffschlüssig an der Trägereinheit festgelegt ist, ist es bevorzugt, dass es sich von der Trägereinheit weg erstreckt, oder mit anderen Worten, von dieser absteht. Weiterhin bevorzugt ist dabei die Referenzgeometrie als Aussparung, vorzugsweise als längliche Aussparung, oder auch als kreisrunde Aussparung in der Referenzeinheit ausgebildet. Insbesondere wird dann, wenn die Referenzgeometrie auf der am Fahrwerk des Nutzfahrzeuges nach innen gewandten Seite angeordnet ist und somit für einen Anwender des Bremssystems nicht ohne Weiteres von außen sichtbar ist, ist es bevorzugt, dass die Position des Anzeigeelements relativ zur Referenzgeometrie durch einen Anwender ertastbar ist. Besonders bevorzugt kann dabei die Referenzgeometrie einen Vorsprung aufweisen, welcher beispielsweise das Vorliegen eines kritischen Verschleißzustandes indiziert, wenn das Anzeigeelement benachbart zur Referenzgeometrie bzw. zum Vorsprung der Referenzgeometrie angeordnet ist. Es kann auf diese Weise mit hoher Sicherheit der Verschleißzustand des Bremssystems durch einen Anwender abgelesen werden.

Vorzugsweise erstreckt sich das Anzeigeelement im Wesentlichen quer zu einer Schwenk- oder Verlagerungsrichtung der Trägereinheit. Insbesondere bevorzugt weist das Anzeigeeinheit eine Haupterstreckungsrichtung auf, das heißt eine Richtung, entlang derer die Erstreckung des Anzeigeelement größer ist als in den anderen Raumrichtungen. Insbesondere bevorzugt erstreckt sich diese Haupterstreckungsrichtung des Anzeigeelements quer und insbesondere bevorzugt senkrecht zu einer Schwenk- oder Verlagerungsrichtung der Trägereinheit. Als Schwenk- oder Verlagerungsrichtung der Trägereinheit kommt dabei insbesondere die von der Verlagerung der Bremsbacken während des Bremsvorganges beschriebene Bahn zur Definition dieser Geometriegröße infrage. Insbesondere bevorzugt erstreckt sich somit das Anzeigeelement im Wesentlichen quer zu einer Ebene, welche durch die Verlagerungsbewegung der Bremsbacken bzw. der bewegten Teile der Betätigungseinheit aufgespannt wird. Mit Vorteil steht somit das Anzeigeelement im Wesentlichen quer zu der Schwenkrichtung bzw. quer zu der Verlagerungsrichtung der Trägereinheit, insbesondere bevorzugt der Bremsbacke, von dieser ab, und es ist auf einfache Weise möglich, von außerhalb des Bremssystems die Verlagerungsbewegung der Trägereinheit und bestimmte Positionen der Trägereinheit relativ zur Referenzgeometrie über das Anzeigeelement zu bestimmen.

Insbesondere bevorzugt ist das Anzeigeelement als Bolzen ausgebildet und in einem distalen Endbereich der Trägereinheit angeordnet. Besonders bevorzugt ist das Anzeigeelement ein Bolzen, welcher an der Trägereinheit festgelegt ist und neben der Anzeige der Position der Trägereinheit relativ zur Referenzeinheit auch weitere Funktionen, wie beispielsweise die Abstützung der Bremsbacken gegenüber einer Nachstell- und/oder einer Rückstellvorrichtung des Bremssystems übernimmt. Durch diese Ausübung verschiedener Aufgaben durch ein als Bolzen ausgebildetes Anzeigeelement kann insbesondere das Gewicht des Bremssystems deutlich reduziert werden, da mit einer geringen Anzahl an Bauteilen eine große Bandbreite von Funktionen im Bremssystem verwirklicht werden kann. Der distale Endbereich der Trägereinheit ist vorzugsweise der Bereich einer als Bremsbacke ausgebildeten Trägereinheit, in welchem diese mit der Betätigungseinheit zusammenwirkt.

In einer insbesondere bevorzugten Ausführungsform ist die Referenzgeometrie als Aussparung ausgebildet, durch welche ein Anwender mit einem Finger hindurchlangen kann, wobei die Anzeigeeinheit an der Trägereinheit derart angeordnet ist, das ein Zustand des Bremssystems, in welchem der maximal Verschleiß noch nicht erreicht ist, dadurch gekennzeichnet ist, dass der Anwender durch die Referenzgeometrie hindurch die Anzeigeeinheit ertasten und/oder sehen kann. In einer besonders einfachen Ausführungsform des Bremssystems ist die Referenzgeometrie als einfache, vorzugsweise kreisrunde Aussparung ausgebildet, welche in die als Blech bzw. Abdeckblech ausgebildete Referenzeinheit eingebracht ist. Die Anzeigeeinheit ist an der Trägereinheit vorzugsweise derart angeordnet, dass der Zustand, in welchem kein Verschleiß am Bremssystem vorliegt, sich in einer Position der Anzeigeeinheit relativ zur Referenzeinheit bzw. relativ zur Referenzgeometrie äußert, in welcher die Anzeigeeinheit genau mittig bzw. vollständig unterhalb der Referenzgeometrie angeordnet ist. Mit zunehmendem Verschleiß des Bremssystems verschiebt sich dabei die Position der Anzeigeeinheit gemeinsam mit der Position der Trägereinheit relativ zur Referenzeinheit derart, dass der maximal zulässige Verschleiß des Bremssystems dadurch gekennzeichnet ist, dass ein Anwender des Bremssystems die Anzeigeeinheit durch die als Aussparung ausgebildete Referenzgeometrie hindurch gerade noch ertasten und/oder sehen kann. Für den Anwender ist somit auf einfache Weise feststellbar, dass in absehbarer Zeit der maximal zulässig Verschleiß des Bremssystems überschritten ist, und er einen Wechsel der Bremsbeläge des Bremssystems einleiten muss. Der Vorteil dieser Ausführungsform ist, dass die Referenzgeometrie besonders klein ausgebildet sein kann und auf einfache Weise beispielsweise durch einen Stopfen verschlossen werden kann, um im normalen Betrieb des Bremssystems zu verhindern, dass Schmutz und Verunreinigungen in das Innere des Bremssystems gelangen können. Weiterhin ist auch die Ausbildung der Anzeigeeinheit besonders einfach, da diese lediglich einen charakteristischen Vorsprung oder eine entsprechende charakteristische Geometrie aufweisen muss, welche an der Trägereinheit derart angeordnet ist, dass sie sich mit zunehmendem Verschleiß aus dem durch die Referenzgeometrie hindurch erreichbaren Bereich heraus verlagert.

In einer bevorzugten Ausführungsform ist die Trägereinheit an einem verlagerbaren Abschnitt der Betätigungseinheit vorgesehen, wobei die Trägereinheit vorzugsweise eine Außenfläche einer Nachstelleinrichtung der Betätigungseinheit ist. Mit dieser bevorzugten Ausführungsform kann erreicht werden, dass die Anzeigeeinheit unabhängig von den Bremsbacken des Bremssystems in die entsprechende, einen bestimmten Verschleißzustand anzeigenden Position relativ zur Referenzeinheit bringbar ist. Dies ist insbesondere daher vorteilhaft, dass an den Bremsbacken in der Regel höhere Temperaturbeanspruchung vorliegt, welche vorzugsweise nicht auf die Anzeigeeinheit übertragen werden soll um eine Verletzung des Anwenders beim Ertasten des Position der Anzeigeeinheit zu vermeiden. Weiterhin ist es so möglich, durch einfache Modifikation der Betätigungseinheit das Bremssystem mit einer Anzeigevorrichtung im Sinne der vorliegenden Erfindung auch in bereits vorhandene Trommelbremssysteme zu integrieren, ohne dafür die in hoher Stückzahl gefertigten Bremsbacken modifizieren zu müssen.

Alternativ bevorzugt ist die Trägereinheit an einer Bremsbacke des Bremssystems vorgesehen, wobei die Trägereinheit vorzugsweise ein Lagerauge an der Bremsbacke ist. Die Festlegung der Anzeigeeinheit an der Bremsbacke des Bremssystems kann bevorzugt sein, da an der Bremsbacke entsprechende Eingriffsgeometrien zumeist bereits vorgesehen sind und daher nur geringfügige Modifikationen am Bremssystem erforderlich sind. So ist insbesondere zur Gewährleistung einer Rückstellfunktion der Bremsbacken vorzugsweise bereits ein Lagerauge an einem distalen Ende der Bremsbacke vorgesehen, in welches ein beispielsweise als Bolzen ausgebildetes Anzeigeelement einführbar und an diesem Lagerauge festlegbar, vorzugsweise festgelegt ist.

Weitere Vorteile und Merkmal der vorliegenden Erfindung ergeben sich aus der nachfolgenden Beschreibung mit Bezug auf die beigefügten Figuren. Es können dabei einzelne Merkmale einzelner Ausführungsformen auch in anderen Ausführungsformen Anwendung finden, sofern dies nicht explizit ausgeschlossen ist oder als technisch nicht sinnvoll erscheint. Es zeigen:
- Fig. 1a und 1b: zwei Ansichten einer bevorzugten Ausführungsform des erfindungsgemäßen Bremssystems,
- Fig. 2a und 2b: zwei Ansichten einer weiteren bevorzugten Ausführungsform des erfindungsgemäßen Bremssystems,
- Fig. 3a und 3b: zwei Ansichten einer weiteren bevorzugten Ausführungsform des erfindungsgemäßen Bremssystems,
- Fig. 4: eine weitere teilweise geschnittene Ansicht einer bevorzugten Ausführungsform des erfindungsgemäßen Bremssystems, und
- Fig. 5a und 5b: zwei weitere Ansichten einer bevorzugten Ausführungsform des erfindungsgemäßen Bremssystems.

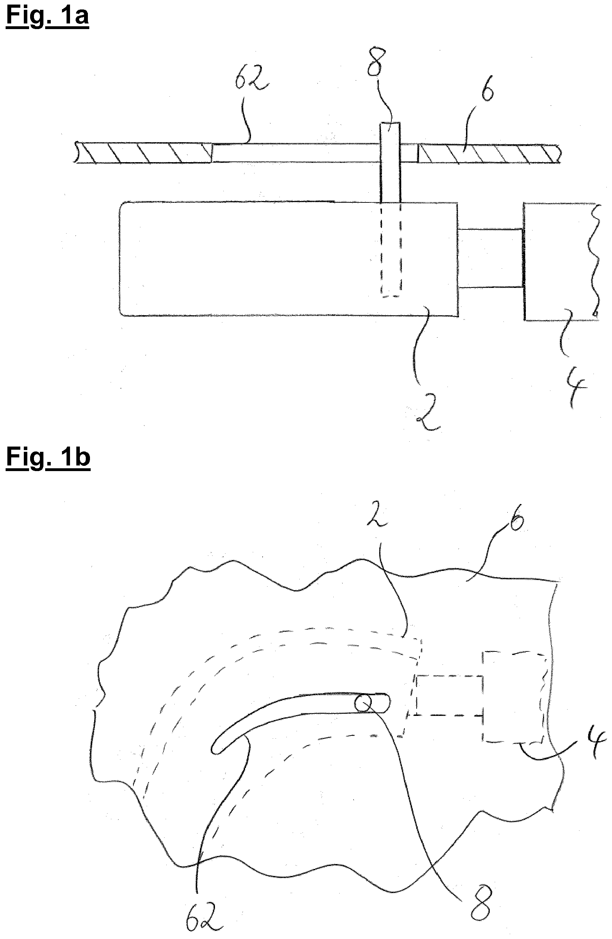

Fig. 1a zeigt schematisch und stark vereinfacht die wesentlichen Komponenten des erfindungsgemäßen Bremssystems. Dabei ist eine Trägereinheit 2 vorgesehen, an welcher eine Anzeigeeinheit 8 vorzugsweise festgelegt ist. Weiterhin ist eine Betätigungseinheit 4 vorgesehen, welche eine Kraft auf die vorzugsweise als Bremsbacke ausgebildete Trägereinheit 2 überträgt, um diese in die linke Richtung, bezogen auf die Anordnung in der Figur, zu verlagern. Oberhalb von Trägereinheit 2 und Betätigungseinheit 4 ist eine Referenzeinheit 6 angeordnet, welche die Trägereinheit 2 und die Betätigungseinheit 4 zumindest bereichsweise überdeckt bzw. abschirmt. In einer besonders bevorzugten Ausführungsform schirmt die Referenzeinheit 6 Trägereinheit 2 und Betätigungseinheit 4 vollständig in einer Richtung ab, im vorliegenden Beispiel also gegen von oben kommende Umwelteinflüsse. Die Referenzeinheit 6 weist eine Referenzgeometrie 62 auf, durch welche die Anzeigeeinheit 8 zumindest bereichsweise vorteilhafterweise hindurchragt. Bei dieser Ausführungsform kann der Anwender des Bremssystems von der in der Figur als Oberseite gezeigten Seite des Bremssystems aus die genaue Position der Anzeigeeinheit 8 relativ zur Referenzgeometrie 62 feststellen und auf diese Weise auf eine Position der Trägereinheit 2 relativ zur Referenzeinheit 6 schließen. Eine bestimmte Position der Trägereinheit 2, welche im vorliegenden Fall vorzugsweise eine Bremsbacke des Bremssystems ist, relativ zur Referenzeinheit 6 steht dabei insbesondere für das Vorliegen eines bestimmten Verschleißzustandes der Bremsbeläge der Bremsbacke.

Fig. 1b zeigt die in Fig. 1 a dargestellte Ausführungsform von der Seite, von welcher aus ein Anwender des Bremssystems an das Bremssystem herangelangen kann. Dabei sind die Betätigungseinheit 4 und die Trägereinheit 2 größtenteils durch die Referenzeinheit 6 verdeckt. Die Referenzgeometrie 62 ist vorteilhafterweise als längliche Aussparung in der Referenzeinheit 6 ausgebildet. Die Anzeigeeinheit 8 ist dabei für einen Anwender des Bremssystems ertastbar und/oder sichtbar, wobei ihre Position relativ zur länglich ausgebildeten Referenzgeometrie 62 für einen bestimmten Verschleißzustand steht.

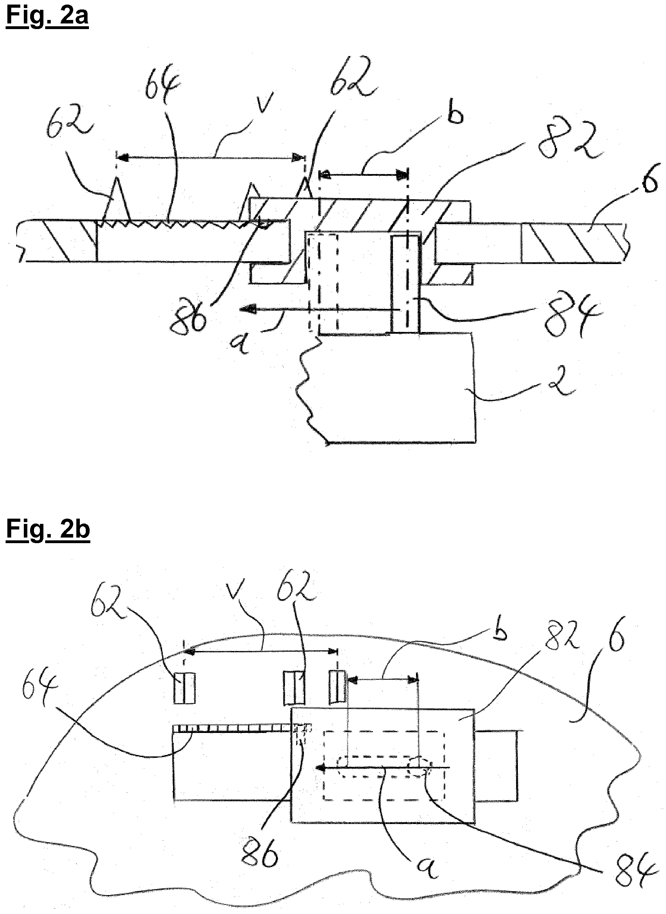

Fig. 2a zeigt eine weitere bevorzugte Ausführungsform des erfindungsgemäßen Bremssystems. Dabei weist die Anzeigeeinheit 8 ein Stellelement 84 auf, welches an der Trägereinheit 2 festgelegt ist. Weiterhin weist die Anzeigeeinheit 8 ein Anzeigeelement 82 auf, welches vorteilhafterweise an der Referenzeinheit 6 geführt ist und eine bestimmte Position relativ zur Referenzgeometrie 62 einnehmen kann. Wie in der Figur dargestellt, weist das Stellelement 84 einen Bewegungspielraum relativ zum Anzeigeelement 82 auf, wobei dieser Bewegungsspielraum als Ausgleich für den Betriebsweg b des Bremssystems dient. Der Betriebsweg b ist vorzugsweise der Weg, um welchen die Bremsbacke während eines Brems- und Entspannungsvorgangs relativ zur Referenzeinheit 6 verlagert wird und wieder zurück verlagert wird. An der Referenzeinheit 6 ist vorzugsweise eine Rastgeometrie 64 vorgesehen, welche dazu ausgelegt ist, mit einer entsprechenden Eingriffsgeometrie 86 des Anzeigeelements 82 in formschlüssigen Eingriff zu gelangen, wobei nur eine relativ geringe Kraft zur Überwindung des formschlüssigen Eingriffs zwischen Rastgeometrie 64 und Eingriffsgeometrie 86 erforderlich ist und das Anzeigeelement 82 durch das Stellelement 84 entlang der Anzeigebahn a oder parallel zur Anzeigebahn a relativ zur Referenzeinheit 6 verlagerbar ist. Der Vorteil dieser Ausführungsform ist, dass auch nach Lösen bzw. Entspannen der Bremse das Anzeigeelement 82 noch den maximal ausgelenkten Zustand der Trägereinheit 2 anzeigt. Weiterhin ist die Referenzgeometrie 62 vorteilhafterweise als Vorsprung oder Vielzahl von Vorsprüngen ausgebildet, welche einen Verschleißweg v kennzeichnet, entlang dessen sich das Anzeigeelement 82 relativ zur Referenzeinheit 6 verlagern lässt. Der in Fig. 2a rechts gezeigte Vorsprung der Referenzgeometrie 62 zeigt bei Übereinstimmung mit der Lage der in der Fig. links gezeigten Kante des Anzeigeelements 82 den Zustand minimalen Verschleißes an. Wenn sich das Anzeigeelement 82 bis auf Höhe des in der Figur links gezeigten Vorsprungs der Referenzgeometrie 62 verlagert hat, ist dadurch der maximale Verschleißzustand des Bremssystems angezeigt.

Fig. 2b zeigt die in Fig. 2a gezeigte Ausführungsform ebenfalls wieder aus der Perspektive des Anwenders des Bremssystems, wobei die gleichen Merkmale des Bremssystems mit gleichen Bezugszeichen gekennzeichnet wurden.

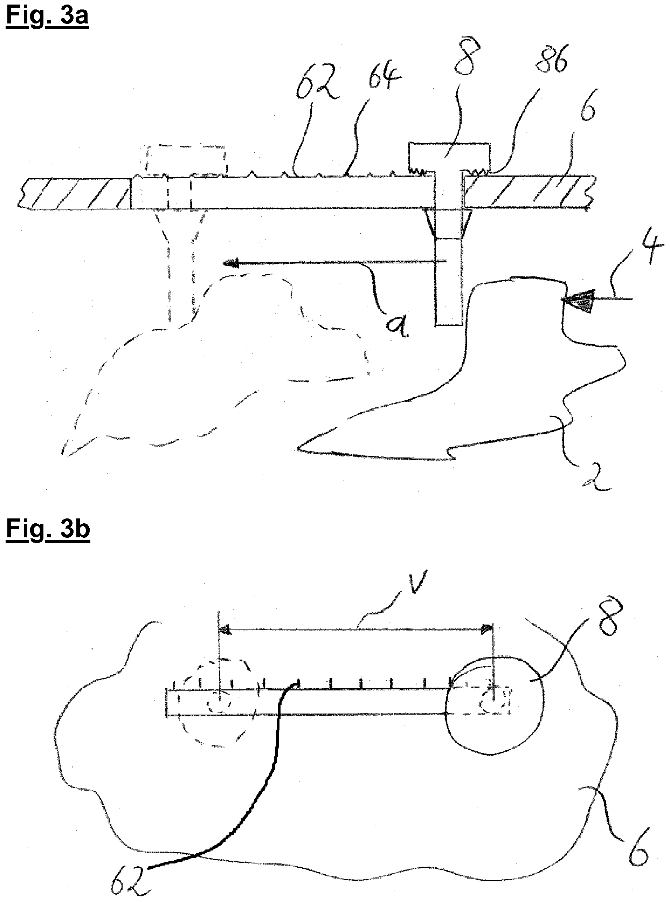

Fig. 3a zeigt eine Ausführungsform des erfindungsgemäßen Bremssystems, bei welcher die Anzeigeeinheit 8 nicht an der Trägereinheit 2 festgelegt ist, sondern lediglich von der Trägereinheit 2 entlang einer Anzeigebahn a verlagert wird. Die Anzeigeeinheit 8 ist dabei vorzugsweise an der Referenzeinheit 6 geführt, wobei ein Verlagern der Anzeigeeinheit 8 relativ zur Referenzeinheit 6 quer zur Anzeigebahn a nicht möglich ist. Der Vorteil dieser Ausführungsform ist, dass die Anzeigeeinheit 8 wesentlich einfacher ausgestaltet werden kann, wobei das vorzugsweise bolzenförmige Anzeigeelement 82 einen entsprechenden Clipsmechanismus aufweist, mittels welchem die Anzeigeeinheit 8 einfach in die als Aussparung ausgebildete Referenzgeometrie 62 der Referenzeinheit 6 eingepresst werden kann und anschließend im Betrieb der Trommelbremse von der Trägereinheit 2 verlagert wird, wobei die jeweilige Position von Anzeigeeinheit 8 zu Referenzeinheit 6 einen bestimmten Verschleißzustand kennzeichnet. Wiederum weist die Referenzeinheit 6 vorzugsweise eine Rastgeometrie 64 und die Anzeigeeinheit 8 eine korrespondierende Eingriffsgeometrie 86 auf um das Anzeigeelement 82 nach Entspannen der Bremse in der Position zu halten, die es durch Einwirken der Trägereinheit 2 in ihrer maximal ausgelenkten Position erreicht hat.

Fig. 3b zeigt die in Fig. 3a dargestellte Ausführungsform des erfindungsgemäßen Bremssystems aus Anwendersicht, wobei der Verschleißweg v analog zu der Ausführungsform von Fig. 2a und 2b gekennzeichnet ist.

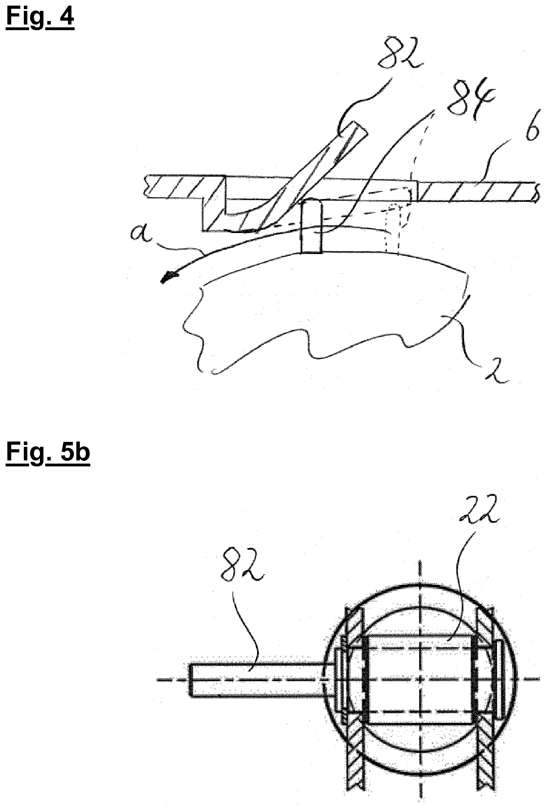

Fig. 4 zeigt eine weitere bevorzugte Ausführungsform des erfindungsgemäßen Bremssystems, wobei das Anzeigeelement 82 eine Feststellfunktion aufweist, welche durch einen plastisch verformbaren Abschnitt des Anzeigeelements 82 gewährleistet ist. Dabei ist die Anzeigeeinheit 8 zweiteilig ausgebildet und weist zum einen ein Stellelement 84 auf, welches an der Trägereinheit 2 festgelegt ist und zum anderen ein Anzeigeelement 82, welches als von der Referenzeinheit 6 abstehendes Element ausgebildet ist. Mit jeder Verlagerung der Trägereinheit 2 entlang der Anzeigebahn a relativ zur Trägereinheit 6 verlagert sich auch das Stellelement 84 weiter und drückt das zumindest abschnittsweise plastisch verformbare Anzeigeelement 82 nach oben. Abgesehen von einer Rückfederung verursacht durch einen einem gewissen Anteil elastischer Verformung des Anzeigeelements 82, verharrt dieses dabei jeweils in der maximal ausgelenkten Position und kennzeichnet somit auch nach Entspannen der Bremse die Lage der Trägereinheit 2 bei Anliegen der maximalen Bremskraft. Der maximal zulässige Verschleißzustand des Bremssystems kann dabei dadurch gekennzeichnet sein, dass das Anzeigeelement 82 wie in der Figur dargestellt über die Referenzeinheit 6 hinausragt.

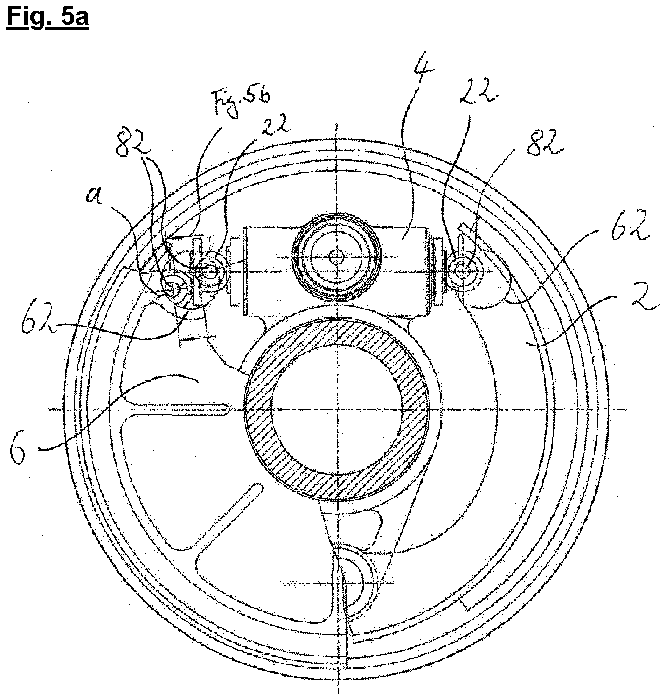

Fig. 5a und Fig. 5b zeigen zwei teilweise geschnittene Ansichten einer bevorzugten Ausführungsform des bevorzugten Bremssystems. Dabei ist nur schematisch dargestellt, dass die Betätigungseinheit 4 sowie zwei an dem Bremssystem vorgesehene Trägereinheiten 2 durch eine Referenzeinheit 6 größtenteils verdeckt sind. Die Referenzeinheit 6 weist eine, vorzugsweise zwei als einfache kreisrunde Aussparung ausgebildete Referenzgeometrie 62 auf, durch welche hindurch der Eingriffsbereich zwischen Trägereinheit 2 und Betätigungseinheit 4 für einen Anwender des Bremssystems ertastbar oder sichtbar ist. Die Stelleinheit 8 weist vorzugsweise ein als Bolzen ausgebildetes Anzeigeelement 82 auf, welches in den als Lagerbereich ausgebildeten distalen Endbereich 22 der Trägereinheit 2 eingefügt und an diesem festgelegt ist. In dem Moment, in dem die an dem Bremssystem bzw. an der als Bremsbacke ausgebildeten Trägereinheit 2 angeordneten Bremsbeläge ihren maximal zulässigen Verschleiß erreicht haben, befindet sich das Anzeigeelement 82 somit an der linken Seite der Referenzgeometrie 62.

Die in Fig. 5b dargestellte Schnittansicht in der in Fig. 5a gekennzeichneten Schnittebene verdeutlicht, dass das Anzeigeelement 82 quer zu der Schwenkrichtung oder Verlagerungsrichtung der Trägereinheit 2 von der Trägereinheit 2 absteht und vorzugsweise als zylindrischer Bolzen ausgebildet ist.

### Bezugszeichen:

- 2: - Trägereinheit
- 4: - Betätigungseinheit
- 6: - Referenzeinheit
- 8: - Anzeigeeinheit
- 22: - distaler Endbereich
- 62: - Referenzgeometrie
- 64: - Rastgeometrie
- 82: - Anzeigeelement
- 84: - Stellelement
- 86: - Eingriffsgeometrie
- a: - Anzeigebahn
- b: - Betätigungsweg
- v: - Verschleißweg

## Patentansprüche

1. Bremssystem, welches als Spreizkeiltrommelbremse ausgeführt ist, umfassend eine Trägereinheit (2), eine Betätigungseinheit (4), eine Referenzeinheit (6) und eine Anzeigeeinheit (8),
wobei die Referenzeinheit (6) die Trägereinheit (2) und die Betätigungseinheit (4) zumindest bereichsweise abschirmt,
wobei die Betätigungseinheit (4) an der Trägereinheit (2) angreift und die Trägereinheit (2) in eine bestimmte Position relativ zur Referenzeinheit (6) verlagert oder in einer Position relativ zur Referenzeinheit (6) sichert,
wobei die Trägereinheit (2) an der Anzeigeeinheit (8) angreift, um die Anzeigeeinheit (8) in eine bestimmte Position relativ zur Referenzeinheit (6) zu verlagern,
wobei ein Verschleißzustand des Bremssystems über die Position der Anzeigeeinheit (8) relativ zu einer an der Referenzeinheit (6) vorgesehenen Referenzgeometrie (62) von außerhalb des Bremssystems bestimmbar ist,
**dadurch gekennzeichnet, dass** die Anzeigeeinheit (8) zumindest abschnittsweise an der Referenzeinheit (6) geführt und gegen Verlagerung quer zu einer Anzeigebahn (a) gesichert ist.

2. Bremssystem nach Anspruch 1,
wobei die Anzeigeeinheit (8) zumindest abschnittsweise an der Trägereinheit (2) festlegbar ist.

3. Bremssystem nach einem der vorhergehenden Ansprüche,
wobei die Anzeigeeinheit (8) ein Anzeigeelement (82) aufweist, dessen Position relativ zur Referenzgeometrie (62) durch einen Anwender haptisch und/oder visuell feststellbar ist.

4. Bremssystem nach Anspruch 3,
wobei das Anzeigeelement (82) eine Feststellfunktion aufweist, welche das Anzeigeelement (82) in seiner maximal ausgelenkten Position relativ zur Referenzeinheit (6) sichert.

5. Bremssystem nach Anspruch 4,
wobei die Feststellfunktion durch ein Eingriffselement (86) des Anzeigeelements (82) hergestellt ist, welches formschlüssig und/oder kraftschlüssig in eine Rastgeometrie (64) der Referenzeinheit (6) eingreift.

6. Bremssystem nach Anspruch 3 bis 5,
wobei das Anzeigeelement (82) bereichsweise von der Trägereinheit (2) absteht,
wobei die Referenzgeometrie (62) als Aussparung ausgebildet ist durch welche das Anzeigeelement (82) sichtbar und/oder ertastbar ist und/oder durch welche das Anzeigeelement (82) hindurch ragt.

7. Bremssystem nach einem der Ansprüche 3 bis 6,
wobei das Anzeigeelement (82) sich im Wesentlichen quer zu einer Schwenk- oder Verlagerungsrichtung der Trägereinheit (2) erstreckt.

8. Bremssystem nach einem der Ansprüche 3 bis 7,
wobei das Anzeigeelement (82) als Bolzen ausgebildet ist und in einem distalen Endbereich (22) der Trägereinheit (2) angeordnet ist.

9. Bremssystem nach einem der vorhergehenden Ansprüche,
wobei die Referenzgeometrie (62) als Aussparung ausgebildet ist, durch welche ein Anwender mit einem Finger hindurchlangen kann,
wobei die Anzeigeeinheit (8) an der Trägereinheit (2) derart angeordnet ist, dass ein Zustand des Bremssystems, in welchem der maximale Verschleiß noch nicht erreicht ist, **dadurch gekennzeichnet ist, dass** der Anwender durch die Referenzgeometrie (62) hindurch die Anzeigeeinheit (8) ertasten und/oder sehen kann.

10. Bremssystem nach einem der vorhergehenden Ansprüche,
wobei die Anzeigeeinheit (8) entlang der Anzeigebahn (a) im Wesentlichen translatorisch verlagerbar ist.

## Claims

1. Brake system which is in the form of a wedge-actuated drum brake, comprising a carrier unit (2), an actuation unit (4), a reference unit (6) and an indicator unit (8),
wherein the reference unit (6) shields the carrier unit (2) and the actuation unit (4) at least in regions,
wherein the actuation unit (4) engages on the carrier unit (2) and displaces the carrier unit (2) into a particular position relative to the reference unit (6) or secures the carrier unit in one position relative to the reference unit (6), wherein the carrier unit (2) engages on the indicator unit (8) in order to displace the indicator unit (8) into a particular position relative to the reference unit (6),
wherein a state of wear of the brake system can be determined from outside the brake system by way of the position of the indicator unit (8) relative to a reference geometry (62) provided on the reference unit (6),
**characterized in that** the indicator unit (8) is guided at least in sections on the reference unit (6) and is secured against displacement transversely with respect to an indicator path (a).

2. Brake system according to Claim 1, wherein the indicator unit (8) can be fixed at least in sections to the carrier unit (2).

3. Brake system according to one of the preceding claims,
wherein the indicator unit (8) has an indicator element (82) whose position relative to the reference geometry (62) can be haptically and/or visually identified by a user.

4. Brake system according to Claim 3,
wherein the indicator element (82) has an immobilizing function which secures the indicator element (82) in its position of maximum deflection relative to the reference unit (6).

5. Brake system according to Claim 4,
wherein the immobilizing function is realized by way of an engagement element (86) of the indicator element (82), which engagement element engages in positively locking and/or non-positively locking fashion into a detent geometry (64) of the reference unit (6).

6. Brake system according to Claim 3 to 5,
wherein the indicator element (82) projects in regions from the carrier unit (2),
wherein the reference geometry (62) is in the form of a cutout through which the indicator element (82) is visible and/or touchable and/or through which the indicator element (82) projects.

7. Brake system according to one of Claims 3 to 6,
wherein the indicator element (82) extends substantially transversely with respect to a pivoting or displacement direction of the carrier unit (2).

8. Brake system according to one of Claims 3 to 7,
wherein the indicator element (82) is in the form of a bolt and is arranged in a distal end region (22) of the carrier unit (2).

9. Brake system according to one of the preceding claims,
wherein the reference geometry (62) is in the form of a cutout through which a user can insert a finger,
wherein the indicator unit (8) is arranged on the carrier unit (2) such that a state of the brake system in which the maximum wear has not yet been reached, **characterized in that** that the user can touch and/or see the indicator unit (8) through the reference geometry (62).

10. Brake system according to one of the preceding claims,
wherein the indicator unit (8) is displaceable in substantially translational fashion along the indicator path (a).

## Revendications

1. Système de freinage de type frein à tambour à coin d'écartement, comprenant une unité de support (2), une unité d'actionnement (4), une unité de référence (6) et une unité d'affichage (8), dans lequel
l'unité de référence (6) protège par blindage au moins partiellement l'unité de support (2) et l'unité d'actionnement (4),
l'unité d'actionnement (4) attaque l'unité de support (2) et déplace l'unité de support (2) jusque dans une position définie par rapport à l'unité de référence (6) ou la bloque dans une position par rapport à l'unité de référence (6),
l'unité de support (2) attaque l'unité d'affichage (8) pour déplacer l'unité d'affichage (8) jusque dans une position définie par rapport à l'unité de référence (6),
un état d'usure du système de freinage peut être déterminé depuis l'extérieur du système de freinage à l'aide de la position de l'unité d'affichage (8) par rapport à une géométrie de référence (62) prévue sur l'unité de référence (6),
**caractérisé en ce que** l'unité d'affichage (8) est guidée au moins localement sur l'unité de référence (6) et est bloquée à l'encontre d'un déplacement transversalement à une trajectoire d'affichage (a).

2. Système de freinage selon la revendication 1,
dans lequel l'unité d'affichage (8) est susceptible d'être immobilisée au moins localement sur l'unité de support (2).

3. Système de freinage selon l'une des revendications précédentes,
dans lequel l'unité d'affichage (8) comprend un élément d'affichage (82) dont la position par rapport à la géométrie de référence (62) peut être constatée par un utilisateur par voie tactile et/ou visuelle.

4. Système de freinage selon la revendication 3,
dans lequel l'élément d'affichage (82) présente une fonction d'immobilisation qui bloque l'élément d'affichage (82) dans sa position déviée au maximum par rapport à l'unité de référence (6).

5. Système de freinage selon la revendication 4,
dans lequel la fonction d'immobilisation est réalisée par un élément d'engagement (86) de l'élément d'affichage (82) qui vient s'engager par coopération de formes et/ou de forces dans une géométrique d'enclenchement (64) de l'unité de référence (6).

6. Système de freinage selon la revendication 3 à 5,
dans lequel l'élément d'affichage (82) fait saillie localement de l'unité de support (2),
la géométrie de référence (62) étant réalisée sous forme d'échancrure à travers laquelle l'élément d'affichage (82) est visible et/ou palpable, et/ou à travers laquelle fait saillie l'élément d'affichage (82).

7. Système de freinage selon l'une des revendications 3 à 6,
dans lequel l'élément d'affichage (82) s'étend sensiblement transversalement à une direction de pivotement ou de déplacement de l'unité de support (2).

8. Système de freinage selon l'une des revendication 3 à 7,
dans lequel l'élément d'affichage (82) est réalisé sous forme de goujon et est agencé dans une zone d'extrémité distale (22) de l'unité de support (2).

9. Système de freinage selon l'une des revendications précédentes,
dans lequel la géométrie de référence (62) est réalisée sous forme d'échancrure permettant à un utilisateur de passer son doigt,
l'unité d'affichage (8) étant agencée sur l'unité de support (2) de telle sorte qu'un état du système de freinage dans lequel l'usure maximale n'est pas encore atteinte est **caractérisé en ce que** l'utilisateur peut palper et/ou voir l'unité d'affichage (8) à travers la géométrie de référence (62).

10. Système de freinage selon l'une des revendications précédentes,
dans lequel l'unité d'affichage (8) est mobile sensiblement en translation le long de la trajectoire d'affichage (a).
